# FASCICULE DE BREVET EUROPEEN

(11) **EP 2 644 937 B1**
(45) Date de publication et mention de la délivrance du brevet: **06.05.2015**
(21) Numéro de dépôt: 13290066.3
(22) Date de dépôt: 18.03.2013
(51) Int. Cl.: F16F 15/32, F42B 10/02

(54) **Missile tactique et masselotte d'équilibrage pour ce missile**
Taktisches Flugkörper und Auswuchtgewicht für dieses Flugkörper
Tactical missile and balancing weight for this missile

(30) Priorité: 28.03.2012 FR 1200928
(43) Date de publication de la demande: 02.10.2013
(73) Titulaire: MBDA France, 92350 Le Plessis-Robinson (FR)
(72) Inventeur: Barthelemy, Patrick, 18500 Marmagne (FR); Dubois, Philippe, 18110 Pigny (FR); Carton, Laurent, 18400 Saint Florent SUR Cher (FR); Sibillaud, Nicolas, 18000 Bourges (FR); Ferrat, Marc, 18230 Saint-Doulchard (FR); Paintendre, Frédéric, 92330 Sceaux (FR)
(74) Mandataire: Bonnetat, Christian

(56) Documents cités:
- US-A- 3 433 534
- US-A1- 2006 001 309
- US-A1- 2007 108 834
- US-A1- 2010 213 755

## Description

La présente invention concerne les missiles tactiques et leur équilibrage. Quoique non exclusivement, elle se rapporte plus particulièrement aux missiles antichars.

On sait que, pour assurer le vol d'un tel missile jusqu'à son point d'impact, il est indispensable que le missile soit parfaitement équilibré en roulis et selon l'axe longitudinal. À cet effet, il est déjà connu d'équilibrer un missile à l'aide de masselottes métalliques compactes, massives et pesantes, ces masselottes étant fixées sur le missile par perçage et boulonnage, par exemple.

Une telle procédure connue d'équilibrage d'un missile est longue, complexe et artisanale. De plus, elle est dangereuse puisqu'elle s'effectue sur des missiles actifs, à l'aide d'outils à risques.

C'est ainsi que le document US3433534 décrit un missile comprenant des billes libres dans une gorge pour équilibrer un missile tactique.

Par ailleurs, le document US2006/0001309 décrit un sac plastique comprenant des billes pour l'équilibrage de roues de véhicules.

Par ailleurs, lors de la détonation de la charge du missile ou lors de l'éclatement accidentel du propulseur du missile, ces masselottes d'équilibrage compactes sont propulsées en tous sens à la manière des balles d'un shrapnell. Bien entendu, si la détonation de la charge ou l'éclatement du propulseur se produisent à une distance pas assez grande du poste de tir, il peut en résulter un endommagement de celui-ci et, plus gravement, des blessures pour le personnel servant ledit poste de tir.

La présente invention a pour but de remédier à ces inconvénients, en simplifiant la procédure d'équilibrage des missiles tactiques en roulis et selon l'axe longitudinal, en évitant l'utilisation d'outils dangereux sur des propulseurs actifs et en interdisant aux masselottes d'équilibrage de pouvoir se transformer en projectiles dangereux.

À cette fin, selon l'invention, une masselotte d'équilibrage pour un missile tactique pouvant tourner autour de son axe longitudinal est remarquable en ce qu'elle est constituée par de la grenaille dont la granulométrie est au plus égale à 1 mm avec une masse moyenne des grains de la grenaille inférieure à 0,02 g et qui est enfermée dans un emballage clos apte à être désagrégé lors de l'explosion du missile.

Ainsi, sous l'effet de la détonation de la charge ou d'un éventuel éclatement du propulseur, l'emballage de la grenaille est désagrégé et la grenaille forme une gerbe de faible énergie, à cause de la petitesse et de la dispersion des grains. Les masselottes conformes à la présente invention ne peuvent donc se transformer en projectiles dangereux.

Avantageusement, la masse des grains les plus gros de la grenaille est au plus égale à 0,04 g.

De préférence, afin de réduire le volume de ladite masselotte d'équilibrage pour la rendre facilement logeable dans le missile, la densité de la matière de ladite grenaille est au moins égale à 15.

Dans un mode de réalisation avantageux, la masselotte conforme à la présente invention est constituée de grenaille de tungstène.

L'emballage contenant la grenaille peut être un sachet souple, de préférence en une matière thermosoudable.

Ainsi, la masselotte conforme à la présente invention est aisément réalisable, puisqu'il suffit d'introduire dans ledit sachet la masse désirée de grenaille, puis de fermer ledit sachet par thermosoudure.

Bien entendu, pour obtenir un équilibrage précis dudit missile tactique, il est avantageux de réaliser préalablement un jeu de masselottes d'équilibrage de masses différentes, conformes à la masselotte de l'invention décrite ci-dessus.

Pour faciliter la mise en place desdites masselottes d'équilibrage sur ledit missile, on prévoit avantageusement des alvéoles aptes à recevoir lesdites masselottes d'équilibrage. De telles alvéoles sont de préférence pratiquées dans la face interne d'au moins un capot aérodynamique dudit missile. Ainsi, puisqu'un tel capot est généralement monté de façon amovible, il est aisé d'introduire lesdites masselottes d'équilibrage dans les alvéoles qu'il comporte. En variante, lesdites alvéoles peuvent être accessibles de l'extérieur, à travers des fenêtres qui sont éventuellement obturées après mise en place des masselottes d'équilibrage, par exemple à l'aide d'un ruban adhésif.

Dans le cas où ledit missile tactique comporte au moins un épaulement entre deux parties de diamètres différents et un capot aérodynamique de transition recouvrant ledit épaulement, il est avantageux que lesdites alvéoles soient pratiquées dans la face interne dudit capot aérodynamique de transition.

Les figures du dessin annexé feront bien comprendre comment l'invention peut être réalisée. Sur ces figures, des références identiques désignent des éléments semblables.

La figure 1 montre, en perspective et en vol, un exemple de missile tactique auquel est appliquée la présente invention.

La figure 2 est une vue, en perspective de l'arrière, d'un premier capot aérodynamique de transition du missile de la figure 1.

La figure 3 est une vue, en perspective de l'avant, d'un second capot aérodynamique de transition du missile de la figure 1.

La figure 4 montre une masselotte d'équilibrage pour le missile de la figure 1.

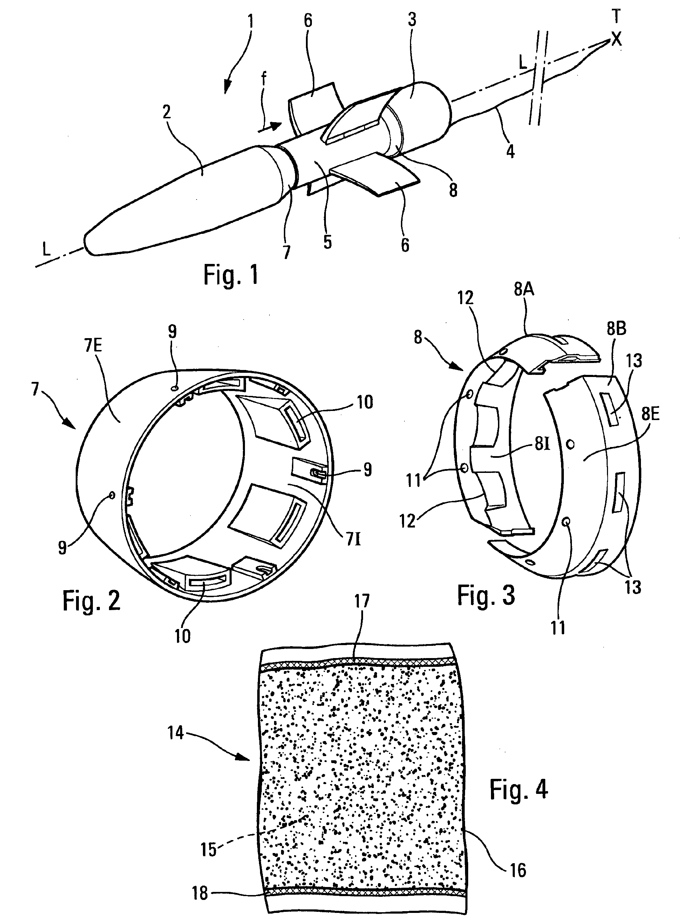

Le missile tactique 1, conforme à la présente invention et représenté à titre d'exemple sur la figure 1, est du type missile antichar guidé par fil. À l'avant, le missile 1 comporte une charge détonante 2, tandis qu'à l'arrière est prévue une bobine 3, de laquelle se déroule le fil de guidage 4 grâce auquel un tireur T (représenté par une simple croix) peut guider ledit missile 1 vers une cible (non représentée). Entre la charge avant 2 et la bobine arrière 3, le missile 2 comporte un propulseur 5, par exemple du type à propergols. Le propulseur 5 porte des ailettes 6 pour la mise en rotation du missile 1 autour de son axe longitudinal L - L.

Par ailleurs, le propulseur 5 présente un diamètre inférieur à ceux de la charge avant 2 et de la bobine arrière 3, de sorte que ledit missile 1 présente un premier épaulement entre la charge avant 2 et le propulseur 5, et un second épaulement entre le propulseur 5 et la bobine arrière 3.

Sur la figure 1, lesdits premier et second épaulements ne sont pas visibles, car ils sont respectivement recouverts par des premier et second capots aérodynamiques de transition 7 et 8.

Comme on peut le voir à plus grande échelle sur la figure 2, le premier capot aérodynamique de transition 7 présente la forme d'une couronne d'une seule pièce, percée de trous 9 pour le passage de vis (non représentées), aptes à fixer ledit premier capot aérodynamique de transition 7 sur le missile 1. La face externe 7E dudit premier capot aérodynamique de transition 7 est conique pour relier aérodynamiquement la charge avant 2 au propulseur 5, tandis que la face interne 7I dudit premier capot porte des alvéoles internes 10, circonférenciellement équiréparties.

De son côté, comme le montre à plus grande échelle la figure 3, le second capot aérodynamique de transition 8 présente la forme d'une couronne divisée en deux pièces diamétrales 8A, 8 B (pour faciliter son montage) et percée de trous 11 pour le passage de vis (non représentées), aptes à les fixer sur le missile 1. La face interne 8I du capot aérodynamique de transition 8 comporte des alvéoles internes 12, accessibles depuis l'extérieur à travers des fenêtres 13. Lorsque les deux pièces diamétrales 8A, 8B sont fixées sur le missile 1 pour former ledit second capot aérodynamique de transition 8, la face externe 8E de ce dernier est au moins en partie conique pour relier aérodynamiquement le propulseur 5 à la bobine 3.

Sur la figure 4, on a représenté une masselotte 14, conforme à la présente invention, destinée à l'équilibrage du missile 1 en roulis et également selon son axe longitudinal L - L.

La masselotte 14 est constituée par une petite masse de grenaille 15 enfermée dans un emballage clos 16.

La grenaille 15 présente une faible granulométrie, au plus égale à 1 mm, mais la densité de la matière la constituant est élevée, au moins égale à 1 5. De préférence, la masse moyenne des grains de la grenaille est inférieure à 0,02 g, alors que la masse des grains le plus gros de celle-ci est au plus égale à 0,04 g. Une telle grenaille est avantageusement de la grenaille de tungstène.

Quant à l'emballage 16, il peut s'agir d'un sachet souple, de préférence en une matière thermoplastique thermosoudable, clos, par exemple, par deux lignes thermosoudées 17 et 18.

Ainsi, la réalisation de la masselotte 14 est particulièrement simple et il est aisé de réaliser un jeu de masselottes 14 de masses différentes, par exemple étagées de 2 à 12 g.

Pour équilibrer le missile 1, on le monte sur machine d'équilibrage connue (non représentée), apte à le mettre en rotation autour de son axe longitudinal L - L et à en détecter les balourds.

Pour supprimer ceux-ci, on introduit des masselottes 14, de masses appropriées :
- à travers les fenêtres 13, dans les alvéoles internes 12 du capot aérodynamique de transition 8, et/ou
- dans les alvéoles internes 10 du capot aérodynamique de transition 7, après avoir désolidarisé celui-ci de ladite charge 2 (élimination des vis traversant les trous 9) et l'avoir coulissé sur ledit missile (voir la flèche f sur la figure 1).

Après remontage du capot aérodynamique de transition 7 sur l'épaulement séparant la charge 2 et le propulseur 5, on repère les éventuels balourds restants grâce à ladite machine d'équilibrage. On renouvelle les opérations précédentes jusqu'à l'obtention d'un équilibrage satisfaisant pour ledit missile 1.

Lorsque la charge 2 ou le propulseur 5 explose, il en est de même du missile 1, et les emballages 16 des masselottes (disposées dans les alvéoles 10 et/ou 12 des capots aérodynamiques de transition 7 et/ou 8) sont volatilisés et la grenaille 15 est projetée autour du missile 1.

Grâce à la faible granulométrie et à la faible masse des grains de la grenaille 15, aucun d'entre eux ne peut devenir un projectile dangereux. D'ailleurs, l'expérience a montré que, à l'explosion du missile 1, ladite grenaille est alors au moins en partie elle-même volatilisée.

## Revendications

1. Masselotte (14) d'équilibrage pour un missile tactique (8) pouvant tourner autour de son axe longitudinal (L-L),
**caractérisée en ce qu'**elle est constituée par de la grenaille (15) dont la granulométrie est au plus égale à 1 mm avec une masse moyenne des grains de la grenaille (15) inférieure à 0,02 g et qui est enfermée dans un emballage clos (16) apte à être désagrégé lors de l'explosion dudit missile (8).

2. Masselotte selon la revendication 1,
**caractérisée en ce que** la masse des grains les plus gros de la grenaille (15) est au plus égale à 0,04 g.

3. Masselotte selon l'une des revendications 1 ou 2,
**caractérisée en ce que** la densité de la matière de ladite grenaille (15) est au moins égale à 15.

4. Masselotte selon l'une des revendications 1 à 3,
**caractérisée en ce qu'**elle est constituée de grenaille (15) de tungstène.

5. Masselotte selon l'une des revendications 1 à 4,
**caractérisée en ce que** ledit emballage est un sachet souple (16).

6. Masselotte selon la revendication 5,
**caractérisée en ce que** ledit sachet souple (16) est en une matière thermosoudable.

7. Jeu de masselottes (14) d'équilibrage pour un missile tactique (1) pouvant tourner autour de son axe longitudinal (L - L),
**caractérisé en ce qu'il** comporte une pluralité de masselottes de masses différentes telles que celle (14) spécifiée sous l'une quelconque des revendications 1 à 6.

8. Missile tactique (1) pouvant tourner autour de son axe longitudinal (L - L) et équilibré au moyen de masselottes d'équilibrage,
**caractérisé en ce que** lesdites masselottes d'équilibrage sont conformes à celle (14) spécifiée sous l'une quelconque des revendications 1 à 6.

9. Missile selon la revendication 8,
**caractérisé en ce qu'il** comporte des alvéoles (10, 12) pour loger lesdites masselottes d'équilibrage (14).

10. Missile selon la revendication 9,
**caractérisé en ce que** lesdites alvéoles (10, 12) sont pratiquées dans la face interne (71, 81) d'au moins un capot aérodynamique (7, 8) dudit missile (1).

11. Missile selon la revendication 10, comportant au moins un épaulement entre deux parties (2, 5 ; 3, 5) de diamètres différents et un capot aérodynamique de transition (7, 8) recouvrant ledit épaulement, **caractérisé en ce que** lesdites alvéoles (10, 12) sont pratiquées dans la face interne (71, 81) d'au moins un capot aérodynamique (7, 8).

## Patentansprüche

1. Ausgleichsgewicht (14) für einen taktischen Flugkörper (8), der um seine Längsachse (L-L) rotieren kann,
**dadurch gekennzeichnet, dass** es aus Schrot (15) besteht, dessen Korngröße höchstens 1 mm beträgt, mit einer mittleren Masse der Körner des Schrots (15) von weniger als 0,02 g, und welcher in einer geschlossenen Umhüllung (16) eingeschlossen ist, die geeignet ist, bei der Explosion des Flugkörpers (8) zerstört zu werden.

2. Ausgleichsgewicht nach Anspruch 1,
**dadurch gekennzeichnet, dass** die Masse der größten Körner des Schrots (15) höchstens 0,04 g beträgt.

3. Ausgleichsgewicht nach einem der Ansprüche 1 oder 2,
**dadurch gekennzeichnet, dass** die Dichte des Materials des Schrots (15) mindestens 15 beträgt.

4. Ausgleichsgewicht nach einem der Ansprüche 1 bis 3,
**dadurch gekennzeichnet, dass** es aus Wolframschrot (15) besteht.

5. Ausgleichsgewicht nach einem der Ansprüche 1 bis 4,
**dadurch gekennzeichnet, dass** die Umhüllung ein flexibler Beutel (16) ist.

6. Ausgleichsgewicht nach Anspruch 5,
**dadurch gekennzeichnet, dass** der flexible Beutel (16) aus einem heißsiegelfähigen Material besteht.

7. Satz Ausgleichsgewichte (14) für einen taktischen Flugkörper (1), der um seine Längsachse (L-L) rotieren kann,
**dadurch gekennzeichnet, dass** er mehrere Ausgleichsgewichte mit unterschiedlichen Massen von der Art des Ausgleichsgewichts (14) nach einem der Ansprüche 1 bis 6 aufweist.

8. Taktischer Flugkörper (1), der um seine Längsachse (L-L) rotieren kann und mithilfe von Ausgleichsgewichten ausbalanciert ist,
**dadurch gekennzeichnet, dass** die Ausgleichsgewichte von der Art des Ausgleichsgewichts (14) nach einem der Ansprüche 1 bis 6 sind.

9. Flugkörper nach Anspruch 8,
**dadurch gekennzeichnet, dass** er Kammern (10, 12) zur Aufnahme der Ausgleichsgewichte (14) aufweist.

10. Flugkörper nach Anspruch 9,
**dadurch gekennzeichnet, dass** die Kammern (10, 12) in der Innenseite (71, 81) mindestens einer aerodynamischen Haube (7, 8) des Flugkörpers (1) ausgebildet sind.

11. Flugkörper nach Anspruch 10, welcher mindestens einen Absatz zwischen zwei Teilen (2, 5; 3, 5) mit unterschiedlichen Durchmessern und eine diesen Absatz abdeckende aerodynamische Übergangshaube (7, 8) aufweist,
**dadurch gekennzeichnet, dass** die Kammern (10, 12) in der Innenseite (71, 81) mindestens einer aerodynamischen Haube (7, 8) ausgebildet sind.

## Claims

1. Balance weight (14) for a tactical missile (8) capable of rotating about its longitudinal axis (L-L),
**characterised in that** it is formed by shot (15), the particle size of which is at most equal to 1 mm, with the average mass of the grains of the shot (15) being less than 0.02 g, and which is housed in a closed package (16) that can be disintegrated when said missile (8) explodes.

2. Balance weight according to claim 1, **characterised in that** the mass of the largest grains of said shot (15) is at most equal to 0.04 g.

3. Balance weight according to either claim 1 or claim 2, **characterised in that** the density of the material of said shot (15) is at least equal to 15.

4. Balance weight according to any of claims 1 to 3, **characterised in that** it is formed by tungsten shot (15).

5. Balance weight according to any of claims 1 to 4, **characterised in that** said package is a flexible sachet (16).

6. Balance weight according to claim 5, **characterised in that** said flexible sachet (16) is made of a heat-sealable material.

7. Set of balance weights (14) for a tactical missile (1) capable of rotating about its longitudinal axis (L-L), **characterised in that** it comprises a plurality of balance weights with different masses, such as the balance weight (14) specified according to any of claims 1 to 6.

8. Tactical missile (1) capable of rotating about its longitudinal axis (L-L) and balanced by means of balance weights, **characterised in that** said balance weights are consistent with the balance weight (14) specified according to any of claims 1 to 6.

9. Missile according to claim 8, **characterised in that** it comprises cells (10, 12) for housing said balance weights (14).

10. Missile according to claim 9, **characterised in that** said cells (10, 12) are made in the inner face (71, 81) of at least one aerodynamic cowling (7, 8) of said missile (1).

11. Missile according to claim 10, comprising at least one shoulder between two parts (2, 5; 3, 5) with different diameters, and an aerodynamic transition cowling (7, 8) covering said shoulder, **characterised in that** said cells (10, 12) are made in the inner face (71, 81) of at least one aerodynamic cowling (7, 8).
